# FASCICULE DE BREVET EUROPEEN

(11) **EP 3 459 135 B1**
(45) Date de publication et mention de la délivrance du brevet: **03.06.2020**
(21) Numéro de dépôt: 17731206.3
(22) Date de dépôt: 17.05.2017
(51) Int. Cl.: H01M 8/04007, H01M 8/0432, H01M 8/04746

(54) **SYSTEME DE REGULATION THERMIQUE POUR PILE A COMBUSTIBLE**
WÄRMEREGULIERUNGSSYSTEM FÜR EINE BRENNSTOFFZELLE
THERMAL REGULATION SYSTEM FOR A FUEL CELL

(30) Priorité: 20.05.2016 FR 1654506
(43) Date de publication de la demande: 27.03.2019
(73) Titulaire: Safran Power Units, 31200 Toulouse (FR)
(72) Inventeur: ROMET, Antoine, 77550 Moissy-Crayamel Cedex (FR); LE GONIDEC, Serge, 77550 Moissy-Crayamel Cedex (FR)
(74) Mandataire: Cabinet Beau de Loménie
(86) Numéro de dépôt international: PCT/FR2017/051191
(87) Numéro de publication internationale: WO 2017/198948

(56) Documents cités:
- WO-A1-2015/040270
- FR-A1- 2 935 475
- KR-A- 20160 020 670
- US-A- 4 362 789
- US-A- 5 441 821

## Description

### DOMAINE DE L'INVENTION

Le présent exposé concerne le domaine de la régulation thermique, et plus particulièrement un système de régulation thermique pour une pile à combustible. La régulation thermique désigne de manière générale le chauffage, le refroidissement et/ou l'ajustement d'une température à une température de consigne.

### ARRIÈRE-PLAN TECHNOLOGIQUE

Une pile à combustible, aussi appelée pile ou PAC ci-après, comprend un empilement d'une ou plusieurs cellules, parfois désigné par le terme anglais *« stack »,* chaque cellule mettant en œuvre la réaction d'un oxydant et d'un réducteur pour générer un courant électrique.

Une pile à combustible a généralement un rendement électrique considéré comme faible au regard du rendement obtenu avec d'autres sources de puissance. Ce rendement est typiquement de l'ordre de 50%, le reste étant dissipé sous forme de chaleur. Il importe donc de maximiser ce rendement en faisant fonctionner la pile à une température optimale. Par ailleurs, pour certaines piles, fonctionner en-dessous d'une certaine température dégrade irrémédiablement les cellules.

Il est donc nécessaire de pouvoir maintenir la pile à sa température de fonctionnement optimal. Ceci peut nécessiter de chauffer la pile à combustible avant son démarrage ou de la refroidir pendant son fonctionnement, afin d'évacuer la puissance thermique produite qui n'est pas convertie en puissance électrique.

Plusieurs systèmes de régulation thermique ont été conçus. Cependant, lorsque la pile à combustible se trouve dans un environnement tel qu'un aéronef spatial, ces systèmes sont pénalisants en termes de fiabilité et de masse.

La demande de brevet KR20160020670 décrit un système de régulation thermique d'une pie à combustible comprenant un organe de pompage passif raccordé à un circuit de refroidissement de a pile à combustible.

La demande de brevet FR2935475 divulgue un échangeur de chaleur permettant la modulation de la température par mélange de fluides à des températures différentes d'un moteur thermique.

Il existe donc un besoin pour un nouveau type de pile à combustible.

### PRÉSENTATION DE L'INVENTION

A cet effet, le présent exposé concerne un système de régulation thermique pour une pile à combustible, comprenant un organe de pompage passif ayant une première entrée raccordée à une première conduite, une deuxième entrée raccordée à une deuxième conduite, et une sortie configurée pour être raccordée à un circuit de refroidissement de la pile à combustible, l'organe de pompage passif étant configuré pour entraîner un fluide passant dans la deuxième conduite à l'aide d'un fluide passant dans la première conduite, par effet Venturi, la première conduite et la deuxième conduite étant configurées pour être raccordées à une sortie du circuit de refroidissement de la pile à combustible, la première conduite étant munie d'un échangeur de chaleur de sorte que la première conduite et la deuxième conduite sont configurées pour alimenter l'organe de pompage passif en fluides à des températures différentes.

On appelle organe de pompage passif un organe au sein duquel le pompage d'un fluide n'est pas, ou du moins pas entièrement, provoqué par le mouvement d'une pièce qui transmet au liquide son énergie mécanique. Ainsi, l'organe de pompage passif peut être dépourvu de piston, engrenages, palettes, compresseur ou analogue. Par opposition, un organe de pompage actif peut être une pompe ou un compresseur classique.

L'effet Venturi est un effet bien connu en soi selon lequel un fluide circulant dans une portion convergente d'un tube voit sa vitesse augmenter et sa pression diminuer. La dépression qui se produit peut être utilisée pour réaliser une aspiration, en l'occurrence l'aspiration d'un deuxième fluide. Le fluide entrant dans l'organe de pompage passif par la première conduite est appelé fluide moteur (*« motive flow »*), car c'est lui qui est accéléré et provoque l'aspiration. Le fluide entrant dans l'organe de pompage passif par la deuxième conduite est appelé fluide entraîné (*« suction flow»*), car il est aspiré par la dépression du fluide moteur. Après aspiration du fluide entraîné, le fluide entraîné et le fluide moteur se mélangent au sein et/ou en sortie de l'organe de pompage passif.

Le circuit de refroidissement de la PAC, aussi appelé circuit thermique, est un circuit généralement situé à l'intérieur de l'empilement de cellules et permettant la circulation d'un fluide caloporteur, généralement de l'huile, pour maintenir l'empilement à une température souhaitée.

Au sens du présent exposé, on appelle échangeur de chaleur tout dispositif permettant d'échanger de la chaleur avec un élément extérieur. Par exemple, la première conduite peut être munie d'un aérotherme, d'un ventilateur, ou d'ailettes de refroidissement, ou présenter une forme propice à la dissipation de chaleur. De préférence, l'échangeur de chaleur est configuré de sorte que la température du fluide sortant de la première conduite soit inférieure à la température du fluide sortant de la deuxième conduite.

Ainsi, le fluide passant dans la première conduite entre dans l'organe de pompage passif à une température différente de la température du fluide passant dans la deuxième conduite. Le mélange entre des fluides à des températures différentes au sein de l'organe de pompage passif permet la régulation thermique de la PAC.

Le système de régulation décrit emploie un organe de pompage passif qui comprend aussi peu de pièces mobiles que possible. Par conséquent, la masse totale et le coût du système de régulation sont diminués. De plus, l'organe de pompage passif est moins sensible qu'une pompe classique aux contraintes thermiques liées à la température du liquide de refroidissement, typiquement environ 200°C, et à l'usure due au mouvement de pièces mécaniques. Par conséquent, la fiabilité et la durée de vie du système de régulation thermique sont augmentées.

Dans certains modes de réalisation, le système de régulation thermique comprend en outre un réservoir tampon configuré pour être connecté à ladite sortie du circuit de refroidissement de la pile à combustible, la première conduite et la deuxième conduite étant connectées au réservoir tampon.

Ainsi, en fonctionnement, la sortie du circuit de refroidissement de la pile est connectée au réservoir tampon, puis les première et deuxième conduites s'étendent entre le réservoir tampon et l'organe de pompage passif. Le réservoir tampon permet d'homogénéiser la température à l'entrée des première et deuxième conduites et d'amortir les variations de débit dans le système de régulation thermique.

Dans certains modes de réalisation, l'organe de pompage passif est un éjecteur. Un éjecteur comprend une branche principale ayant une portion convergente, de façon à produire une accélération du fluide moteur. Une branche secondaire est raccordée à la portion convergente de sorte que le fluide moteur, en accélérant et diminuant sa pression par effet Venturi, aspire le fluide entraîné entrant par la branche secondaire. On appelle section de col de l'éjecteur la plus petite section par laquelle passe le fluide moteur. La section de col détermine le débit de fluide moteur ainsi que le rapport entre le débit de fluide moteur et le débit de fluide entraîné.

Dans certains éjecteurs dits à géométrie variable, connus en eux-mêmes, la section de col est variable et peut être pilotée pour ajuster ce rapport.

Dans certains modes de réalisation, le système de régulation thermique comprend une unité de commande de la section de col de l'éjecteur. Ainsi, comme expliqué précédemment, l'unité de commande permet d'ajuster le rapport entre le débit de fluide moteur et le débit de fluide entraîné. Ces deux fluides étant à des températures différentes, la commande du rapport entre ces deux débits permet de moduler la température du mélange de ces deux fluides. Ainsi, la température avec laquelle le fluide caloporteur entre dans le circuit de refroidissement de la pile peut être ajustée.

Dans certains modes de réalisation, le système de régulation thermique comprend en outre une pompe placée sur la première conduite. La pompe permet d'augmenter la pression dans la première conduite, c'est-à-dire d'augmenter la pression du fluide moteur avant son entrée dans l'organe de pompage passif, augmentant ainsi l'efficacité de l'organe de pompage passif. De préférence, afin de limiter la sollicitation thermique de la pompe, la première conduite est utilisée pour faire circuler un fluide plus froid que la deuxième conduite. De préférence, la pompe est située entre l'échangeur de chaleur et l'organe de pompage passif.

Dans certains modes de réalisation, le système de régulation thermique comprend une unité de commande du débit de la pompe. L'unité de commande du débit de la pompe peut être la même unité ou une unité distincte de l'unité de commande de la section de col de l'éjecteur, le cas échéant.

Augmenter le débit du fluide moteur circulant dans la première conduite permet, dans l'organe de pompage passif, d'aspirer davantage de fluide entraîné, ce par quoi le débit sortant de l'organe de pompage passif et entrant dans le circuit de refroidissement de la pile à combustible est également augmenté. De ce fait, la commande du débit de la pompe permet d'ajuster la température de la pile à combustible.

Dans certains modes de réalisation, le système de régulation thermique comprend un dispositif de mesure d'une grandeur représentative de la puissance thermique dégagée par la pile à combustible, notamment par son empilement de cellules. Une grandeur représentative de la puissance thermique dégagée par la pile à combustible peut être toute grandeur de laquelle il est possible de déduire la puissance thermique dégagée par la pile à combustible, typiquement la puissance électrique fournie par la pile. Connaître la puissance thermique dégagée par la pile permet d'anticiper l'évolution de la température et du gradient de température dans la pile.

Dans certains modes de réalisation, l'unité de commande est configurée pour commander la section de col de l'éjecteur et/ou le débit de la pompe en fonction d'une température et/ou de la différence de température du fluide à l'entrée et à la sortie de la pile à combustible.

L'écart de la température de la pile par rapport à une température de consigne indique de quelle façon il faut commander la section de col et/ou le débit de la pompe pour que la température de la pile soit aussi proche que possible de la température de consigne, éventuellement à une certaine marge près. Ceci assure un fonctionnement optimal de la pile. Par ailleurs, la différence de température du fluide à l'entrée et à la sortie de la pile à combustible permet de maîtriser les écarts de température auxquels est soumis l'empilement de cellules. L'entrée et la sortie du circuit de refroidissement peuvent être prises, respectivement, comme entrée et sortie de la pile à combustible. La différence de température du fluide à l'entrée et à la sortie de la pile et la température sont donc chacune une grandeur physique particulièrement utile et efficace pour indiquer que la pile est à une température souhaitée ou non et comment il faut la réguler, c'est-à-dire comment il faut modifier la section de col et/ou le débit de la pompe.

D'autre part, comme on l'a vu précédemment, la section de col et le débit de la pompe sont deux variables de réglage permettant de contrôler le refroidissement de la pile à combustible, en modifiant respectivement la température d'entrée et le débit du fluide caloporteur. Ainsi, commander l'une et/ou l'autre de ces deux variables permet d'agir sur la régulation thermique de la pile à combustible.

Le présent exposé concerne également un procédé de régulation thermique, typiquement pour une pile à combustible, comprenant :
- l'obtention d'une température de la pile à combustible ;
- l'obtention d'une différence de température du fluide à l'entrée et à la sortie du circuit de refroidissement ;
- la commande de la section de col de l'éjecteur et/ou du débit de la pompe en fonction de la température de consigne et de ladite ou lesdites grandeurs.

### BRÈVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 représente schématiquement le système de régulation pour pile à combustible selon un mode de réalisation ;
- la figure 2 illustre le principe de fonctionnement d'un éjecteur selon un mode de réalisation ;
- la figure 3 représente une courbe caractéristique d'un éjecteur selon un mode de réalisation.

### DESCRIPTION DÉTAILLÉE DE L'INVENTION

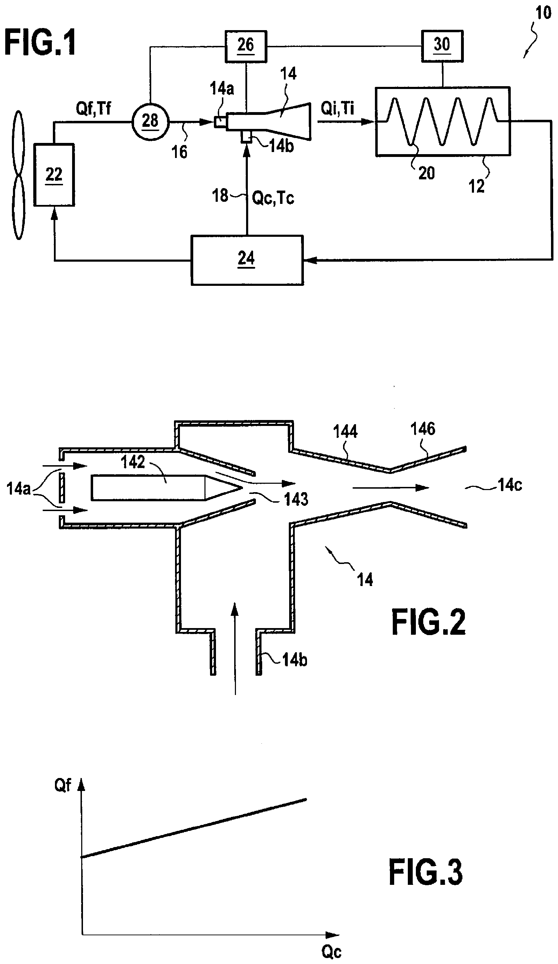

La figure 1 montre un système de régulation thermique 10 (ci-après « système 10 ») d'un empilement de cellules 12 d'une pile à combustible. Par abus de langage et sans perte de généralité, on parle aussi de régulation thermique de la pile à combustible 12 ; dans la suite, la température de la pile 12 désigne la température de l'empilement de cellules. La pile à combustible 12 comprend un circuit de refroidissement 20, ici placé à l'intérieur dudit empilement. L'entrée et la sortie de la pile à combustible 12 désignent respectivement les portions du circuit de refroidissement 20 à l'entrée et à la sortie de l'empilement. Le circuit de refroidissement 20 permet, par la circulation d'un fluide caloporteur, de refroidir ou réchauffer l'empilement pour le maintenir à une température souhaitée (température de consigne), par exemple afin de permettre son démarrage ou d'optimiser son rendement. La température de consigne peut être de l'ordre de 200°C.

Dans ce mode de réalisation, le fluide caloporteur est de l'huile. L'huile peut être de type CALFLO (marque déposée), typiquement une huile restant à l'état liquide sous des pressions relativement faibles (2-3 bar à environ 200°C) et avec un point éclair relativement haut, typiquement supérieur à 200°C voire 220°C. L'homme du métier peut, selon ses compétences, choisir un autre fluide caloporteur adapté de sorte qu'il existe une certaine marge de sécurité entre le point éclair dudit fluide et la température de fonctionnement maximale de la pile à combustible.

Comme indiqué précédemment, le système 10 comprend un organe de pompage passif 14. L'organe de pompage passif 14 a une première entrée 14a raccordée à une première conduite 16, une deuxième entrée 14b raccordée à une deuxième conduite 18, et une sortie 14c configurée pour être raccordée au circuit de refroidissement 20 de la pile à combustible 12. L'organe de pompage passif 14 est alimenté en fluide caloporteur provenant de la première conduite 16 à un débit Qf et une température Tf. L'organe de pompage passif 14 est également alimenté en fluide caloporteur provenant de la deuxième conduite 18, à un débit Qc et une température Tc. Ces deux fluides sont mélangés et le fluide en sortie de l'organe de pompage passif 14 a un débit Qi et une température Ti.

Comme on le verra plus en détail par la suite, l'organe de pompage passif 14 est configuré pour entraîner un fluide passant dans la deuxième conduite 18 à l'aide d'un fluide passant dans la première conduite 16 par effet Venturi.

La première conduite 16 est munie d'un échangeur de chaleur 22. En l'espèce, l'échangeur de chaleur 22 est un aérotherme, c'est-à-dire un appareil comprenant une pièce d'échange de chaleur par conduction et un ventilateur. La chaleur est transmise du fluide vers l'extérieur par la pièce d'échange de chaleur par conduction et le ventilateur améliore par convection forcée l'évacuation de ladite chaleur. Tout autre échangeur de chaleur pourrait toutefois être utilisé.

Ainsi, la première conduite 16 et la deuxième conduite 18 sont configurées pour alimenter l'organe de pompage passif 14 en fluides à des températures différentes. En l'espèce, la température du fluide circulant dans la première conduite 16, en aval de l'aérotherme 22, est inférieure à la température du fluide circulant dans la deuxième conduite 18. L'évacuation de chaleur d'une partie du fluide caloporteur est efficace lorsque le système de régulation thermique est utilisé pour refroidir la pile à combustible 12. A l'inverse, lorsqu'il s'agit de réchauffer la pile à combustible, typiquement avant son démarrage, l'échangeur de chaleur 22 peut être utilisé pour réchauffer le fluide circulant dans la première conduite 16. Eventuellement, une résistance thermique peut être adjointe à l'échangeur de chaleur.

Par ailleurs, la première conduite 16 et la deuxième conduite 18 sont configurées pour être raccordées à une sortie du circuit de refroidissement 20 de la pile à combustible 12. En l'espèce, le système de régulation thermique 10 comprend un réservoir tampon 24. Le réservoir tampon 24 est connecté à la sortie du circuit de refroidissement 20 de la pile à combustible 12. Comme illustré sur la figure 1, la première conduite 16 et la deuxième conduite 18 sont connectées au réservoir tampon 24.

Par ailleurs, le système de régulation thermique comprend une pompe 28. Dans ce mode de réalisation, la pompe 28 peut être placée sur la première conduite, de préférence entre l'échangeur de chaleur 22 et l'organe de pompage passif 14. Ainsi, au vu de ce qui précède, on comprend que la pompe 28 est placée sur la portion de conduite dans laquelle le fluide caloporteur circule à la température la plus basse. Ainsi, la pompe 28 est soumise aussi peu que possible à des contraintes thermiques.

La pompe 28, à l'inverse de l'organe de pompage passif 14, peut être une pompe active dans laquelle l'énergie mécanique est intégralement transmise au fluide par des pièces mécaniques mobiles, aux déperditions thermiques près. La pompe 28 peut être une pompe de gavage ou tout autre élément permettant une alimentation en fluide.

Dans le présent mode de réalisation, l'organe de pompage passif 14 est un éjecteur (ci-après « éjecteur 14 »). Le détail d'un tel éjecteur est représenté schématiquement sur la figure 2.

L'éjecteur 14 comprend un col 143 par lequel est injecté le fluide arrivant par la première entrée 14a, en l'espèce le fluide moteur. En aval du col 143, le fluide moteur subit une dépression dans la portion convergente 144, aspirant ainsi le fluide entraîné qui arrive par la deuxième entrée 14b. Les deux fluides sont mélangés et leur vitesse réduite dans une portion divergente 146 raccordée en aval de la portion convergente 144.

En l'espèce, l'éjecteur 14 est un éjecteur de type à géométrie variable. La section de passage du col 143, appelée aussi « section de col» de l'éjecteur 14, peut être augmentée ou réduite, en l'espèce selon la position axiale d'une tige 142. Les moyens de commande de la position de la tige 142, par exemple des moyens électriques, ne sont pas représentés. Ainsi, le rapport entre le débit de fluide moteur dans l'éjecteur et le débit de fluide aspiré dans l'éjecteur peut être modulé. Plus le col 143 est fermé, plus la section de col est petite, plus la dépression en aval du col est importante et plus il y a de fluide entraîné pour un même débit de fluide moteur.

Les éjecteurs à géométrie variable et les moyens de les piloter sont connus en eux-mêmes. D'autres types d'éjecteurs à géométrie variable que l'éjecteur 14 peuvent être utilisés.

Dans le présent mode de réalisation, l'éjecteur 14 entier peut être réalisé en plastique, à l'exception du col qui peut être métallique. Ainsi, l'éjecteur 14 est particulièrement léger, ce qui le rend très adapté à l'embarquement sur un véhicule aérospatial.

La figure 3 illustre une courbe caractéristique de l'éjecteur 14, dans laquelle le débit de fluide moteur Qf est représenté en fonction du débit de fluide entraîné Qc, dans le domaine de fonctionnement de l'éjecteur 14. Comme on peut le voir, le débit de fluide entraîné Qc est une fonction affine croissante du débit de fluide moteur Qf. Modifier la section de col de l'éjecteur 14 revient à modifier la pente de la droite de la figure 3.

En référence de nouveau à la figure 1, le système de régulation thermique 10 comprend une unité de commande électronique 26. Dans ce mode de réalisation, l'unité de commande électronique 26 est configurée pour commander à la fois la section de col de l'éjecteur 14 et le débit de la pompe 28. Toutefois, ces paramètres pourraient être commandés par des unités de commande distinctes.

Le système de régulation thermique 10 comprend par ailleurs un dispositif de mesure 30 d'une grandeur représentative de la puissance thermique dégagée par la pile à combustible 12, en particulier par son empilement de cellules. Dans le présent mode de réalisation, la grandeur représentative est la puissance électrique fournie par la PAC et le dispositif de mesure 30 est un capteur électrique, typiquement un wattmètre. Connaissant la puissance électrique fournie et une table de rendement de la pile à combustible, il est possible de déterminer la puissance thermique dégagée par la pile.

L'unité de commande électronique 26 dispose ici de l'architecture matérielle d'un ordinateur. Elle peut comporter notamment un processeur, une mémoire morte, une mémoire vive, une mémoire non volatile et des moyens de communication avec le dispositif de mesure 30 permettant à l'unité de commande électronique 26 d'obtenir les mesures réalisées par le dispositif de mesure 30. L'unité de commande électronique 26 et le dispositif de mesure 30 sont par exemple reliés par un bus de données numériques ou une interface série (ex. interface USB (Universal Serial Bus)) ou sans fil connu(e) en soi.

En réalisant d'une part un bilan thermique dans la pile à combustible, pour relier la température du fluide caloporteur dans la pile et la puissance thermique, et d'autre part un bilan enthalpique au sein de l'éjecteur, les inventeurs ont montré que le débit Qf dans la première conduite 16 peut s'exprimer en fonction de la section de col de l'éjecteur 14, de la puissance thermique dégagée par la pile 12, de la température de la pile 12 et de paramètres du système 10 (première relation). La puissance thermique est considérée comme une perturbation dans la mesure où elle est elle-même fixée par la puissance électrique soutirée à la pile 12, laquelle puissance électrique est déterminée par les besoins de l'exploitation.

Par ailleurs, pour préserver les caractéristiques techniques de la pile, l'écart de température auquel est soumis l'empilement de cellules doit demeurer inférieur à une certaine limite, par exemple 20°C. Ceci impose que le débit Qf dans la première conduite 16 soit supérieur à un débit minimal dont on peut montrer qu'il dépend de la puissance thermique dégagée par la pile 12 et de la section de col (deuxième relation). Ce débit minimal correspond à une valeur maximale admissible de la différence de température du fluide caloporteur entre l'entrée et la sortie de la pile 12.

Il s'ensuit que, la puissance thermique dégagée par la pile 12 étant considérée comme une donnée, la section de col et le débit de la pompe 28 sont des variables d'ajustement permettant d'ajuster, via les première et deuxième relations exposées ci-dessus, la température de la pile 12 et la différence de température du fluide caloporteur entre l'entrée et la sortie de la pile 12.

Pour estimer la température de l'empilement en vue de sa comparaison avec une température de consigne, il est possible d'effectuer la moyenne arithmétique des températures du fluide caloporteur à l'entrée et à la sortie de l'empilement. Lesdites températures du fluide peuvent être mesurées par des capteurs reliés au dispositif de mesure 30.

Pour estimer la différence des températures du fluide caloporteur à l'entrée et à la sortie de l'empilement, il suffit de soustraire ces deux valeurs l'une à l'autre. Ainsi, les capteurs permettant d'estimer la température de la pile 12 et la différence de température du fluide caloporteur sont avantageusement mutualisés.

La température de consigne et/ou la différence de température maximale admissible du fluide caloporteur entre l'entrée et la sortie du circuit de refroidissement 20 peuvent être données comme entrées à l'unité de commande 26. De cette façon, l'unité de commande 26 est configurée pour commander la section de col de l'éjecteur 14 et/ou le débit de la pompe 28 en fonction de la température de la pile, ou plus précisément de l'écart de la température de la pile 12 avec la température de consigne, et/ou de la différence de température du fluide caloporteur entre l'entrée et la sortie de la pile à combustible 12.

Dans certains modes de réalisation, cette commande est effectuée de façon multivariable. Dans ces modes de réalisation, l'unité de commande électronique 26 dispose d'une loi multivariable prenant en entrée la température de la pile 12 et la différence de température du fluide caloporteur à l'entrée et à la sortie de l'empilement, et retournant en sortie une commande de la section de col de l'éjecteur 14 et une commande de débit de la pompe 28. La loi multivariable peut prendre la forme d'une matrice de transfert entre ces quatre variables.

Cependant, la présence parmi les deux relations précitées d'une inéquation permet de traiter les deux variables de commande, à savoir le débit et la section de col, de manière séquentielle, donc monovariable. Par exemple, les changements de température peuvent être compensés par un réglage du débit Qf de la pompe 28, conformément à la première relation. Cette première compensation peut être réalisée en boucle fermée, c'est-à-dire avec un asservissement du débit sur l'écart de la température estimée avec la température de consigne. Par ailleurs, on vérifie que la différence de température du fluide caloporteur entre l'entrée et la sortie de l'empilement obtenue est inférieure à une valeur limite, ou de manière équivalente que le débit Qf de la pompe 28 est supérieur à un certain débit minimal. Au besoin, de manière indépendante du réglage du débit Qf, les changements de différence de température du fluide caloporteur entre l'entrée et la sortie de l'empilement peuvent être compensés par un réglage de la section de col de l'éjecteur 14, conformément à la deuxième relation. Cette deuxième compensation peut être faite en boucle ouverte, c'est-à-dire sans asservissement. La commande effectuée par l'unité de commande électronique 26 peut également être faite dans l'ordre inverse, c'est-à-dire en réglant d'abord la section de col de l'éjecteur 14 puis en ajustant le débit de la pompe 28 pour que le critère de débit minimal soit rempli.

A la marge, si la différence de température du fluide caloporteur entre l'entrée et la sortie de l'empilement varie peu, il est possible de considérer qu'elle reste constante et de ramener la régulation thermique à une seule loi de commande monovariable, par exemple en ne contrôlant que le débit de la pompe 28. Dans ce cas, l'organe de pompage passif 14 peut être un éjecteur à géométrie fixe.

Des applications numériques réalisées par les inventeurs ont montré que pour une même température de consigne et une même puissance thermique dégagée par la pile 12, il est possible de trouver plusieurs couples de valeurs pour la section de col et le débit de la pompe 28 qui satisfassent la relation précitée entre les quatre variables et maintiennent la pile 12 à la température souhaitée en régime permanent. Le choix d'un couple de valeurs plutôt qu'un autre peut être fait de façon à minimiser le gradient thermique du fluide caloporteur le long du circuit de refroidissement 20, à minimiser l'énergie consommée par le système de régulation (la pompe 28 nécessite une alimentation en continue, tandis que la section de col de l'éjecteur ne consomme pas d'énergie une fois qu'elle a été modifiée à la valeur souhaitée), ou encore à s'assurer que chaque composant tel que la pompe 28 et l'éjecteur 14 fonctionne dans une zone de fonctionnement optimal.

Il est à noter que le débit de la pompe 28 est une variable intermédiaire. Il est possible de contrôler indirectement cette variable en régulant des variables de commande de la pompe 28 telles que, par exemple, la vitesse, la tension ou le courant. Les différentes façons de commander une pompe sont connues en soi et ne seront pas décrites ici.

Bien qu'on ait décrit un système de régulation thermique convenant à une pile à combustible, ledit système peut être utilisé pour réguler thermiquement d'autres appareils ou dispositifs dont la température est ajustée au moyen d'un fluide caloporteur.

Bien que la présente invention ait été décrite en se référant à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Système de régulation thermique (10) pour une pile à combustible (12), comprenant un organe de pompage passif (14) ayant une première entrée (14a) raccordée à une première conduite (16), une deuxième entrée (14b) raccordée à une deuxième conduite (18), et une sortie (14c) configurée pour être raccordée à un circuit de refroidissement (20) de la pile à combustible (12), l'organe de pompage passif (14) étant configuré pour entraîner un fluide passant dans la deuxième conduite (18) à l'aide d'un fluide passant dans la première conduite (16), par effet Venturi, la première conduite (16) et la deuxième conduite (18) étant configurées pour être raccordées à une sortie du circuit de refroidissement (20) de la pile à combustible (12), la première conduite (16) étant munie d'un échangeur de chaleur (22) de sorte que la première conduite (16) et la deuxième conduite (18) sont configurées pour alimenter l'organe de pompage passif (14) en fluides à des températures différentes.

2. Système de régulation thermique (10) selon la revendication 1, comprenant en outre un réservoir tampon (24) configuré pour être connecté à ladite sortie du circuit de refroidissement (20) de la pile à combustible (12), la première conduite (16) et la deuxième conduite (18) étant connectées au réservoir tampon (24).

3. Système de régulation thermique (10) selon la revendication 1 ou 2, dans lequel l'organe de pompage passif (14) est un éjecteur, tel qu'un éjecteur à géométrie variable.

4. Système de régulation thermique (10) selon la revendication 3, comprenant une unité de commande (26) de la section de col de l'éjecteur (14).

5. Système de régulation thermique (10) selon l'une quelconque des revendications 1 à 4, comprenant en outre une pompe (28) placée sur la première conduite.

6. Système de régulation thermique (10) selon la revendication 5, comprenant une unité de commande (26) du débit de la pompe (28).

7. Système de régulation thermique (10) selon l'une quelconque des revendications 1 à 6, comprenant un dispositif de mesure (30) d'une grandeur représentative de la puissance thermique dégagée par la pile à combustible (12).

8. Système de régulation thermique (10) selon la revendication 4 et/ou la revendication 6, dans lequel l'unité de commande (26) est configurée pour commander la section de col de l'éjecteur (14) et/ou le débit de la pompe (28) en fonction d'une température de la pile à combustible (12) et/ou de la différence de température du fluide à l'entrée et à la sortie de la pile à combustible (12).

## Patentansprüche

1. Wärmeregulierungssystem (10) für eine Brennstoffzelle (12), umfassend ein passives Pumporgan (14) mit einem ersten Einlass (14a), der an eine erste Leitung (16) angeschlossen ist, einem zweiten Einlass (14b), der an eine zweite Leitung (18) angeschlossen ist, und einem Auslass (14c), der dazu ausgelegt ist, an einen Kühlkreislauf (20) der Brennstoffzelle (12) angeschlossen zu werden, wobei das passive Pumporgan (14) dazu ausgelegt ist, ein in der zweiten Leitung (18) fließendes Fluid mit Hilfe eines in der ersten Leitung (16) fließenden Fluids mittels Venturi-Effekt anzutreiben, wobei die erste Leitung (16) und die zweite Leitung (18) dazu ausgelegt sind, an einen Auslass des Kühlkreislaufs (20) der Brennstoffzelle (12) angeschlossen zu werden, wobei die erste Leitung (16) mit einem Wärmetauscher (22) ausgestattet ist, so dass die erste Leitung (16) und die zweite Leitung (18) dazu ausgelegt sind, das passive Pumporgan (14) mit Fluiden mit unterschiedlichen Temperaturen zu beaufschlagen.

2. Wärmeregulierungssystem (10) nach Anspruch 1, ferner umfassend einen Puffertank (24), der dazu ausgelegt ist, mit dem Auslass des Kühlkreislaufs (20) der Brennstoffzelle (12) verbunden zu werden, wobei die erste Leitung (16) und die zweite Leitung (18) mit dem Puffertank (24) verbunden sind.

3. Wärmeregulierungssystem (10) nach Anspruch 1 oder 2, bei dem das passive Pumporgan (14) ein Ejektor, wie ein Ejektor mit variabler Geometrie, ist.

4. Wärmeregulierungssystem (10) nach Anspruch 3, umfassend eine Einheit zur Steuerung (26) des Halsquerschnitts des Ejektors (14).

5. Wärmeregulierungssystem (10) nach einem der Ansprüche 1 bis 4, ferner umfassend eine Pumpe (28), die an der ersten Leitung angeordnet ist.

6. Wärmeregulierungssystem (10) nach Anspruch 5, umfassend eine Einheit zur Steuerung (26) der Förderleistung der Pumpe (28).

7. Wärmeregulierungssystem (10) nach einem der Ansprüche 1 bis 6, umfassend eine Vorrichtung zum Messen (30) einer Größe, die für die von der Brennstoffzelle (12) abgegebene Wärmeleistung repräsentativ ist.

8. Wärmeregulierungssystem (10) nach Anspruch 4 und/oder Anspruch 6, bei dem die Steuereinheit (26) dazu ausgelegt ist, den Halsquerschnitt des Ejektors (14) und/oder die Förderleistung der Pumpe (28) in Abhängigkeit von einer Temperatur der Brennstoffzelle (12) und/oder der Temperaturdifferenz des Fluids am Einlass und am Auslass der Brennstoffzelle (12) zu steuern.

## Claims

1. A thermal regulator system (10) for a fuel cell (12), the system comprising a passive pump member (14) having a first inlet (14a) connected to a first pipe (16), a second inlet (14b) connected to a second pipe (18), and an outlet (14c) configured to be connected to a cooling circuit (20) of the fuel cell (12), the passive pump member (14) being configured to use the Venturi effect to drive a fluid flowing along the second pipe (18) by means of a fluid flowing along the first pipe (16), the first pipe (16) and the second pipe (18) being configured to be connected to an outlet of the cooling circuit (20) of the fuel cell (12), the first pipe (16) being provided with a heat exchanger (22) so that the first pipe (16) and the second pipe (18) are configured to feed the passive pump member (14) with fluids at different temperatures.

2. A thermal regulator system (10) according to claim 1, further comprising a buffer tank (24) configured to be connected to said outlet of the cooling circuit (20) of the fuel cell (12), the first pipe (16) and the second pipe (18) being connected to the buffer tank (24).

3. A thermal regulator system (10) according to claim 1 or claim 2, wherein the passive pump member (14) is an ejector, such as a variable geometry ejector.

4. A thermal regulator system (10) according to claim 3, including a control unit (26) for controlling the throat section of the ejector (14).

5. A thermal regulator system (10) according to any one of claims 1 to 4, further comprising a pump (28) placed on the first pipe.

6. A thermal regulator system (10) according to claim 5, including a control unit (26) for controlling the flow rate of the pump (28).

7. A thermal regulator system (10) according to any one of claims 1 to 6, including a measurement device (30) for measuring a magnitude that is representative of the thermal power given by the fuel cell (12).

8. A thermal regulator system (10) according to claim 4 and/or claim 6, wherein the control unit (26) is configured to control the throat section of the ejector (14) and/or the flow rate of the pump (28) as a function of a temperature of the fuel cell (12) and/or of the temperature difference of the fluid between the inlet and the outlet of the fuel cell (12).
